# EUROPÄISCHE PATENTSCHRIFT

(11) **EP 2 410 878 B1**
(45) Veröffentlichungstag und Bekanntmachung des Hinweises auf die Patenterteilung: **17.07.2013**
(21) Anmeldenummer: 10711053.8
(22) Anmeldetag: 24.03.2010
(51) Int. Cl.: A23L 2/54, A23L 2/56, C12J 1/08

(54) **ERFRISCHUNGSGETRAENK AUF ESSIG BASIS**
VINEGAR-BASED SOFT DRINK
BOISSON RAFRAÎCHISSANTE À BASE DE VINAIGRE

(30) Priorität: 24.03.2009 AT 7772009
(43) Veröffentlichungstag der Anmeldung: 01.02.2012
(73) Patentinhaber: Gisela Nagel GmbH, 2352 Gumpoldskirchen (AT)
(72) Erfinder: NAGEL, Eduard, A-2352 Gumpoldskirchen (AT)
(74) Vertreter: Margotti, Herwig Franz
(86) Internationale Anmeldenummer: PCT/EP2010/053830
(87) Internationale Veröffentlichungsnummer: WO 2010/108951

(56) Entgegenhaltungen:
- CN-A- 101 305 831
- DE-U1-202008 014 587
- FR-A1- 2 913 313
- JP-A- 2007 282 533
- DATABASE WPI Week 200503 Thomson Scientific, London, GB; AN 2005-024937 XP002579476 & JP 2004 350606 A (MUKAIBA KK) 16. Dezember 2004 (2004-12-16)
- anonymous: "Plus Aqua Wellness mit Apfelessing, Holunderblüten, Schizandra und Grüntee extrakt" Ciao 3. Juli 2006 (2006-07-03), XP002579477 Gefunden im Internet: URL:http://www.ciao.de/Plus_Aqua_Wellness_ mit_Apfelessig_Holunderbluten_Schizandra_u nd_Gruntee_extrakt__Test_3106737 [gefunden am 2010-04-23]
- DATABASE WPI Week 200644 Thomson Scientific, London, GB; AN 2006-428431 XP002580512 & KR 2005 038 380 A (OK M H) 27. April 2005 (2005-04-27)
- DATABASE WPI Week 200837 Thomson Scientific, London, GB; AN 2008-F55361 XP002579478 & CN 101 095 551 A (ZHONG X) 2. Januar 2008 (2008-01-02)

## Beschreibung

Die Erfindung betrifft eine Getränkemischung, die mit Kohlensäure versetzt ist sowie einen Anteil an Speiseessig enthaltend Essigsäure aufweist. Weiters wird ein Verfahren zur Herstellung einer erfindungsgemäßen Getränkemischung angegeben.

Weltweit besteht ein ungebrochener Bedarf an alkoholischen Getränken wie beispielsweise Sekt oder Schaumwein, die im Alltag oder bei Feierlichkeiten konsumiert werden. Die Nachteile der Konsumation alkoholischer Getränke sind bekannt. Durch den Genuss derartiger Getränke wird aufgrund des Alkoholgehaltes die Reaktionsfähigkeit des Konsumenten herabgesetzt. Der hohe Zuckergehalt in alkoholischen Getränken führt weiters bei starkem Konsum zu einer meist unerwünschten Gewichtszunahme.

Überdies ist in manchen Weltregionen der Konsum von alkoholischen Gründen aus politischen oder religiösen Gründen grundsätzlich untersagt.

Als Ersatz von Sekt oder Schaumwein bietet sich daher ein moussierendes alkoholfreies Erfrischungsgetränk auf Essig-Basis an, welches beim Genuss nicht zu jenen Beeinträchtigungen führt, die sonst bei Konsumation alkoholischer Getränke auftreten.

Die Essigaufbereitung zählt zu den ältesten Lebensmittelherstellungsverfahren der Menschheit. Speiseessig ist ein sauer schmeckendes Würz- und Konservierungsmittel, das durch Fermentation alkoholhaltiger Flüssigkeiten mit Essigsäurebakterien hergestellt wird. Je nach Kulturkreis können zur Herstellung von Speiseessig beispielsweise Wein, Apfelmost, Bier oder Reiswein, sowie zuckerhaltige Flüssigkeiten wie Traubensaft oder Malzsud dienen.

Speiseessig darf beispielsweise in Deutschland derzeit von 5 Gew.-% bis 15,5 Gew.-% Essigsäure enthalten, wobei Speiseessig aus dem Handel meist eine Essigsäurekonzentration von 5 Gew.-% bis 6 Gew.-% aufweist. Auch mit Wasser verdünnte Essigsäure wird oftmals als Essig bezeichnet, in Deutschland darf allerdings im Speiseessig keine ohne Mikroorganismen chemisch hergestellte Essigsäure enthalten sein.

Im Weiteren wird hier auf durch Fermentation gewonnenen hochwertigen Speiseessig, also auf Gärungsessig, Bezug genommen.

Aus dem Stand der Technik sind zahlreiche Erfrischungsgetränke, die einen Anteil an Speiseessig beinhalten, bekannt.

FR 2 913 313 A1 beschreibt beispielsweise eine Flüssigkeit, in der 10 ml Weinessig, 5 ml Honig sowie 0,05 ml eines natürlichen Fruchtextrakts mit kohlensäurehaltigem Mineralwasser auf 200 ml verdünnt wird. Eine Konzentrationsangabe des Gehalts an Essigsäure im Weinessig fehlt.

In DE 20 2008 014 587 U1 wird ein Apfelessiggetränk genannt, das durch Mischen von Wasser und Apfelessig, welcher einen Gehalt von 5 Gew.-% Essigsäure aufweist, in einem Mischungsverhältnis von zwei Teilen Wasser zu einem Teil Apfelessig hergestellt wird. Das Apfelessiggetränk ist mit einem künstlichen Zuckeraustauschstoff, beispielsweise Aspartam oder Saccharin, gesüßt sowie mit Kohlensäure versetzt. Mit diesem Apfelessiggetränk soll ein Geschmack vergleichbar einer Mischung aus Apfelsaft mit Kohlensäurehaltigem Mineralwassser erzielt werden.

US 2003 0091692 A1 beschreibt ein Essiggetränk, in dem Reisweinessig mit 6 Gew.-% Esssigsäuregehalt, Apfelsaft und ein Zuckersirup vermischt sind. Eine Zugabe von Kohlensäure bzw. von Kohlendioxid wird hier allerdings nicht erwähnt.

Nachteilig an den aus dem Stand der Technik bekannten, auf Speiseessig basierten Erfrischungsgetränken ist, dass meist künstliche Zusatzstoffe, beispielsweise künstliche Zuckeraustauschstoffe, künstliche Fremdfarbstoffe, künstliche Konservierungsmittel oder Geschmacksverstärker den Erfrischungsgetränken zugesetzt werden. Derart mit künstlichen Zusatzstoffen versetzt wird der natürliche, mineralische Geschmack des Speiseessigs in den Getränken überdeckt und verfälscht.

Weiters ist von Nachteil, wenn auf natürlichem Speiseessig basierte Getränke mit Mineralwasser verdünnt werden. Jedes Mineralwasser weist aufgrund seiner Mineralsalzzusammensetzung bzw. seines hohen Mineralsalzgehalts beispielsweise von gelöstem Kalzium, Magnesium und Natrium jeweils einen individuellen Eigengeschmack auf. Die charakteristische Mineralstoffzusammensetzung des Speiseessigs wird daher durch das Beimischen von Mineralwasser mit hohem Mineralsalzgehalt, der meist über 500 mg/l liegt, wobei der Mineralsalzgehalt als fester Rückstand berechnet wird, nachteilig überlagert und verfälscht. So wird beispielsweise die Mineralstoffzusammensetzung von Weinessig, die im Wesentlichen der Mineralstoffzusammensetzung von Wein entspricht, durch die Beimischung von Mineralwasser verändert und ein Wein-ähnlicher Geschmack des alkoholfreien Erfrischungsgetränks somit nachteilig verhindert.

Bei Verwendung von Kohlensäurehaltigem Mineralwasser zur Beimischung von Speiseessig werden aufgrund des Überdrucks in handelsüblichen Mineralwässern meist nur wenige große Kohlensäureperlen im Getränk erhalten. Dies führt allerdings aufgrund des hohen Mineralsalzgehalts zu einem stark prickelnden sowie besonders säurebetonten Geschmack des Getränks, der von vielen Konsumenten als unangenehm abgelehnt wird.

Meist fehlt bei derartigen Erfrischungsgetränken mit einem Anteil an Speiseessig eine Angabe der Essigsäurekonzentration in der trinkfertigen Getränkemischung, was einen weiteren Nachteil darstellt. So wird beispielsweise bei einer höheren Essigsäurekonzentration im trinkfertig gemischten Getränk ebenfalls ein stark ausgeprägter, säurebetonter Geschmack erzielt, der von den Konsumenten ebenfalls als unangenehm empfunden wird.

Es ist somit die Aufgabe der vorliegenden Erfindung ein Erfrischungsgetränk bereitzustellen, das die geschilderten Nachteile des Standes der Technik vermeidet.

Diese Aufgabe wird bei einer Getränkemischung gemäß dem Oberbegriff des Anspruches 1 mit den Merkmalen des kennzeichnenden Teiles des Anspruchs 1 gelöst. Die Unteransprüche betreffen besonders vorteilhafte Ausgestaltungen der Erfindung.

Vorteilhaft beträgt bei einer erfindungsgemäßen Getränkemischung, welche mit Kohlendioxid versetzt ist sowie einen Anteil an Speiseessig enthaltend Essigsäure aufweist, die Konzentration der Essigsäure in der Getränkemischung von 0,1 Gew.-% bis 1,5 Gew.-% Essigsäure, vorzugsweise 0,4 Gew.-% Essigsäure.

Eine solche Getränkemischung ist aufgrund der moderaten Konzentration der Essigsäure in der wässrigen Mischung ein besonders bekömmliches Erfrischungsgetränk, das aufgrund des zugesetzten Kohlendioxids bzw. der gelösten Kohlensäure angenehm moussiert und besonders belebend ist.

Die positive Wirkung des Essigs für den menschlichen Organismus ist aus der Fachliteratur bekannt. Da Essigsäure ein körpereigenes Produkt ist und vom menschlichen Organismus täglich selbst produziert wird, bedeutet ein Verzehr von beispielsweise 100 g Speiseessig für den Stoffwechsel des Körpers, dass etwa 5 bis 6 g an Essigsäure abgebaut werden. Diese Menge an Essigsäure bringt den menschlichen Säure-Basen-Haushalt keineswegs aus dem Gleichgewicht. Im Gegenteil, durch die Konsumation von verdünntem Speiseessig wird unter anderem das körpereigene Immunsystem gestärkt sowie das Austrocknen der Mundschleimhäute verhindert. Weiters ist die Konsumation einer Getränkemischung, welche verdünnten Speiseessig beinhaltet, besonders bekömmlich sowie verdauungsfördernd. Die Konsumation von verdünnter Essigsäure regt weiters die Produktion von Salzsäure in der Magenschleimhaut an und unterstützt somit den Bakterienabbau im Verdauungstrakt und erleichtert die Eiweißverwertung.

Bei einer erfindungsgemäßen Getränkemischung kandelt es Side beim verwendeten Speiseessig um einen doppelt fermentierten Gärungsessig einer alkoholischen Flüssigkeit.

Durch die Verwendung von aus einem durch doppelte Fermentation von alkoholischen Getränken hergestellten Gärungsessig wird sichergestellt, dass die im Gärungsessig enthaltenen Fermentationsprodukte wie beispielsweise 2-Ketogluconsäure, 5-Ketogluconsäure, Gluconsäure, Zitronensäure, Aminosäuren sowie Acetoin und 2,3-Butylenglykol als Bestandteile in der erfindungsgemäßen Getränkemischung vorliegen und eine verbesserte Körperverträglichkeit gewährleisten.

Für eine erfindungsgemäße Getränkemischung wird ein Gärungsessig mit einem Sorbitgehalt unter 0,3 g/l, vorzugsweise unter 0,1 g/l, verwendet.

Diese Grenzwerte entsprechen beispielsweise den derzeit gültigen Bestimmungen des Österreichischen Lebensmittel-Codex. Weinessig muss demnach einen Sorbitgehalt von unter 0,3 g/l aufweisen. Aus Obstbeeren hergestellter Gärungsessig, auch als Beerenweinessig bezeichnet, muss einen Sorbitgehalt von unter 0,1 g/l aufweisen.

Eine erfindungsgemäß mit Kohlendioxid versetzte Getränkemischung weist einen Überdruck auf.

In einer bevorzugten Ausführung weist eine mit Kohlendioxid versetzte Getränkemischung einen Überdruck von bis zu 5 bar auf.

In einer vorteilhaften Ausführungsvariante der Erfindung weist eine mit Kohlensäure versetzte Getränkemischung einen Überdruck von 2 bar bis 5 bar, vorzugsweise von 3 bar bis 4 bar auf.

In einer weiteren Ausführungsvariante weist eine erfindungsgemäße Getränkemischung, die mit Kohlendioxid versetzt ist, einen Überdruck von bis zu 3 bar auf.

Durch die Zugabe von Kohlendioxid, wobei als Reaktionsprodukt des Kohlendioxids mit dem Wasser der Getränkemischung gelöste Kohlensäure entsteht, wird der Druck der Getränkemischung über den Umgebungsdruck erhöht. Die Getränkemischung wird dazu beispielsweise in eine Sektflasche gefüllt und entweder mit einem Sektkorken, oder mit einem Schraubverschluss druckfest verschlossen. Beim Öffnen der Flasche wird die in der Getränkemischung gelöste Kohlensäure frei, die vergleichbar mit einem alkoholischen Sekt- oder Schaumweingetränk besonders vorteilhaft ein fein moussierendes Getränk ergibt. Die charakteristische Geschmacksnote des verwendeten Speiseessigs kommt durch die aufsteigenden, fein moussierenden Kohlendioxid-Bläschen besonders angenehm zur Geltung.

Die Getränkemischung, enthält weiterhin zumindest einen natürlichen Fruchtsaft oder ein natürliches Fruchtsaftgemisch mit einer Konzentration des Fruchtsafts in der Getränkemischung von 0,1 Gew.-% bis 5 Gew.-%.

Als Fruchtsaft oder Fruchtsaftgemisch können sowohl frisch gepresste, natürliche Fruchtsäfte, als auch Fruchtsaftkonzentrate bzw. Fruchtsaftextrakte jeweils reinsortig oder in beliebigen Mischungen aus mehreren Fruchtsaftsorten verwendet werden. Durch die Zugabe des Fruchtsafts wird der Geschmack des Speisessigs der Getränkemischung abgerundet und besonders bekömmlich. Die angeführte Konzentration des Fruchtsafts ist vorteilhaft, um im Zuge der Verdünnung des Speisessigs mit Wasser, wenn eine Essigsäurekonzentration der Getränkemischung von 0,1 Gew.-% bis 1,5 Gew.-% eingestellt wird, in der fertigen Getränkemischung noch einen deutlich wahrnehmbaren Geschmack des zugesetzten Fruchtsaftes zu erzielen. Durch die Zugabe des natürlichen Fruchtsafts werden der im Fruchtsaft enthaltene natürliche Fruchtzucker sowie auch die darin enthaltenen natürlichen Farbstoffe und natürlichen Antioxidantien in geringer Konzentration der Getränkemischung beigefügt.

Zweckmäßig wird einer Getränkemischung gemäß der Erfindung als Fruchtsaft ein Granatapfelsaft zugesetzt.

Granatapfelsaft ist besonders wohlschmeckend und harmoniert als Fruchtsaftzusatz hervorragend mit der Mineralstoffzusammensetzung von Speisessig. Der im Granatapfelsaft enthaltene Fruchtzucker neutralisiert dabei den säuerlichen Essigsäuregeschmack und gewährleistet somit eine besonders wohlschmeckende Getränkemischung.

Gemäß einem weiteren Merkmal der Erfindung beträgt der Zuckergehalt der Getränkemischung unter 15 g/l, vorzugsweise unter 2 g/l.

Die erfindungsgemäße Getränkemischung ist aufgrund des geringen Zuckergehalts somit kalorienarm, was einen weiteren Vorteil darstellt. Der im wahlweise zugesetzten Fruchtsaft enthaltene natürliche Fruchtzucker, welcher der kalorienarmen Getränkemischung in geringer Konzentration zugeführt wird, ist meist zum Süßen ausreichend. Sollten der Getränkemischung Fruchtsäfte oder Fruchtsaftmischungen zugesetzt werden, deren Gehalt an natürlichem Fruchtzucker nicht ausreicht, um den säuerlichen Essigsäuregeschmack zu neutralisieren, so kann auch natürlicher Zucker, beispielsweise Rohrzucker oder Kristallzucker, zum Süßen der Getränkemischung bis zu einem Zuckergehalt unter 15 g/l beigefügt werden.

In einer Fortbildung der Erfindung ist eine Getränkemischung frei von künstlichen Zuckerersatzstoffen wie beispielsweise Aspartam oder Saccharin.

Ein Zusatz derartiger künstlicher Zuckerersatzstoffe würde den harmonischen Geschmack der natürlichen Aromen der erfindungsgemäßen Getränkemischung nachteilig verändern.

In einer bevorzugten Ausführungsform der Erfindung weist eine Getränkemischung einen Ethanolgehalt von unter 0,1 Gew.-%, vorzugsweise von unter 0,01 Gew.-% auf.

Vorteilhaft ist eine erfindungsgemäße Getränkemischung daher im Wesentlichen frei von Alkohol. Ein allfällig vorhandener Restalkohol ist nur mehr in analytisch bestimmbarer Menge in der Getränkemischung nachweisbar.

Somit ist der Konsum der erfindungsgemäßen Getränkemischung als wohlschmeckendes Erfrischungsgetränk insbesondere in Ländern, in denen striktes Alkoholverbot herrscht, vorteilhaft möglich. Sowohl vom optischen Eindruck her mit seinem feinem, mit Sekt bzw. Schaumwein vergleichbaren Mousseux, als auch vom Geschmack ähnelt die erfindungsgemäße Getränkemischung einem zu Sekt vergorenen Wein - allerdings mit dem Vorteil, im Wesentlichen frei von Alkohol zu sein.

Zweckmäßig ist eine erfindungsgemäße Getränkemischung frei von künstlichen Geschmacksverstärkern und/oder künstlichen Farbstoffen und/oder Konservierungsmittelzusätzen.

Künstliche Geschmacksverstärker wie beispielsweise Glutaminsäure und deren Natrium-, Kalium- und Calciumsalze können je nach Qualität dem im Handel befindlichen Speiseessig zugesetzt werden. Ebenso können künstliche Farbstoffe oder künstliche Konservierungsmittel im Speiseessig vorhanden sein. Der für die erfindungsgemäße Getränkemischung verwendete Speiseessig ist vorteilhaft frei von derartigen künstlichen Zusätzen. Somit ist die erfindungsgemäße Getränkemischung ausschließlich aus besonders hochwertigen Naturstoffen hergestellt und ihr Konsum gesundheitsfördernd.

In einer Fortbildung der Erfindung wird ein Verfahren zur Herstellung einer Getränkemischung angegeben, welches weiterhin Trinkwasser enthält, wobei der Speiseessig mit Trinkwasser, welches einen als festen Rückstand berechneten Mineralsalzgehalt von nicht mehr als 500 mg/l, vorzugsweise nicht mehr als 300 mg/l aufweist, unter wahlweiser Zugabe von zumindest einem natürlichen Fruchtsaft oder einem natürlichen Fruchtsaftgemisch gemischt werden, wobei abschließend Kohlendioxid unter Überdruck zugesetzt wird.

Vorteilhaft wird zum Verdünnen des Speisessigs bzw. zum Herstellen der Getränkemischung Trinkwasser bzw. Quellwasser mit einem niedrigen Gehalt an gelösten Mineralstoffen gewählt. Die flüssigen Komponenten Speiseessig, Trinkwasser sowie natürlicher Fruchtsaft bzw. Fruchtsaftgemisch werden dazu in beliebiger Reihenfolge miteinander gemischt. Ebenso ist es denkbar, dass die flüssigen Komponenten nach einer bestimmten Rezeptur jeweils gleichzeitig zusammengemischt werden. Nach Herstellen der flüssigen Mischung kann beispielsweise deren Zusammensetzung bzw. der Essigsäurekonzentration überprüft werden. Anschließend wird Kohlendioxid unter Überdruck zugesetzt und die erfindungsgemäße Getränkemischung kann in druckfeste Flaschen abgefüllt und verschlossen werden.

Es hat sich gezeigt, dass zur Herstellung der Getränkemischung mit Speiseessig und/oder Fruchtsaft bei Verwendung von Mineralwasser, insbesondere von Kohlensäurehaltigem Mineralwasser, mit einem Mineralsalzgehalt über 500 mg/l, wobei der Mineralsalzgehalt als fester Rückstand berechnet wird, anstelle von Trinkwasser bzw. Quellwasser mit einem niedrigeren Gehalt an gelösten Mineralstoffen, unerwünscht große Kohlensäureperlen in der Getränkemischung bilden. Derart große Perlen bzw. Blasen an aufsteigendem Kohlendioxid führen während des Konsums im Mund sowie auf den Geschmackspapillen der Zunge zu einem stark prickelnden, unangenehm säuerlichen Geschmack, welcher den angenehmen Geschmack der Inhaltsstoffe des Erfrischungsgetränks nachteilig überlagert.

Im Gegensatz dazu lässt das Kohlendioxid, welches unter Überdruck der mit Trinkwasser mit geringem Mineralsalzgehalt verdünnten Getränkemischung zugesetzt wird, und welches beim Öffnen einer Flasche als besonders feine Bläschen in der Getränkemischung aufsteigt, den angenehmen, weinähnlichen Geschmack der erfindungsgemäßen alkoholfreien Getränkemischung besonders klar hervor treten.

Vergleichbar mit einem Sekt oder Schaumwein wird auch die erfindungsgemäße Getränkemischung besonders ansprechend beispielsweise in eine druckfeste Sektflasche mit einem Korkenverschluss oder einem Schraubverschluss gefüllt und als alkoholfreie Alternative zu Sekt oder Schaumwein in den Handel gebracht.

## Patentansprüche

1. Getränkemischung, mit Kohlendioxid versetzt sowie mit einem Anteil an Speiseessig enthaltend Essigsäure, **dadurch gekennzeichnet, dass** die Konzentration der Essigsäure in der Getränkemischung von 0,1 Gew.-% bis 1,5 Gew.-% Essigsäure, vorzugsweise 0,4 Gew.-% Essigsäure beträgt, wobei als Speiseessig ein doppelt fermentierter Gärungsessig einer alkoholischen Flüssigkeit, insbesondere ein Weinessig, mit einem Sorbitgehalt unter 0,3 g/l verwendet wird, sowie weiterhin zumindest einen natürlichen Fruchtsaft oder ein natürliches Fruchtsaftgemisch enthaltend, wobei die Konzentration des Fruchtsafts in der Getränkemischung von 0,1 Gew.-% bis 5 Gew.-% beträgt, wobei die mit Kohlendioxid versetzte Getränkemischung einen Überdruck aufweist.

2. Getränkemischung nach Anspruch 1, **dadurch gekennzeichnet, dass** als Fruchtsaft ein Granatapfelsaft zugesetzt wird.

3. Getränkemischung nach Anspruch 1 oder 2, **dadurch gekennzeichnet, dass** ein Gärungsessig mit einem Sorbitgehalt unter 0,1 g/l verwendet wird.

4. Getränkemischung nach einem der Ansprüche 1 bis 3, **dadurch gekennzeichnet, dass** die mit Kohlendioxid versetzte Getränkemischung einen Überdruck von bis zu 5 bar aufweist.

5. Getränkemischung nach einem der Ansprüche 1 bis 4, **dadurch gekennzeichnet, dass** die mit Kohlensäure versetzte Getränkemischung einen Überdruck von 2 bar bis 5 bar, vorzugsweise von 3 bar bis 4 bar aufweist.

6. Getränkemischung nach Anspruch 5, **dadurch gekennzeichnet, dass** die mit Kohlendioxid versetzte Getränkemischung einen Überdruck von bis zu 3 bar aufweist.

7. Getränkemischung nach einem der Ansprüche 1 bis 6, **dadurch gekennzeichnet, dass** der Zuckergehalt der Getränkemischung unter 15 g/l, vorzugsweise unter 2 g/l beträgt.

8. Getränkemischung nach einem der Ansprüche 1 bis 7, **dadurch gekennzeichnet, dass** die Getränkemischung frei von künstlichen Zuckerersatzstoffen ist.

9. Getränkemischung nach einem der Ansprüche 1 bis 8, **dadurch gekennzeichnet, dass** die Getränkemischung einen Ethanolgehalt von unter 0,1 Gew.-%, vorzugsweise von unter 0,01 Gew.-% aufweist.

10. Getränkemischung nach einem der Ansprüche 1 bis 9, **dadurch gekennzeichnet, dass** die Getränkemischung frei von künstlichen Geschmacksverstärkern und/oder künstlichen Farbstoffen und/oder Konservierungsmittelzusätzen ist.

11. Verfahren zur Herstellung einer Getränkemischung nach einem der Ansprüche 1 bis 10 weiterhin Trinkwasser enthaltend, **dadurch gekennzeichnet, dass** Speiseessig mit Trinkwasser, welches einen als festen Rückstand berechneten Mineralsalzgehalt von nicht mehr als 500 mg/l, vorzugsweise nicht mehr als 300 mg/l aufweist, unter wahlweiser Zugabe von zumindest einem natürlichen Fruchtsaft oder einem natürlichen Fruchtsaftgemisch gemischt werden, wobei abschließend Kohlendioxid unter Überdruck zugesetzt wird.

## Claims

1. A beverage mix, mixed with carbon dioxide as well as a portion of table vinegar containing acetic acid, **characterized in that** the concentration of the acetic acid in the beverage mix is 0.1% by weight to 1.5% by weight of acetic acid, preferably 0.4% by weight of acetic acid, wherein as table vinegar there is used a fermentation vinegar double-fermented of an alcoholic liquid, in particular a wine vinegar, with a sorbitol content not exceeding 0.3 g/l, as well as further containing at least a natural fruit juice or a natural fruit juice mixture, wherein the concentration of the fruit juice in the beverage mix is from 0.1% by weight to 5% by weight, wherein the beverage mix mixed with carbon dioxide has overpressure.

2. A beverage mix according to claim 1, **characterized in that** as fruit juice there is added a pomegranate juice.

3. A beverage mix according to claim 1 or 2, **characterized in that** there is used a fermentation vinegar with a sorbitol content not exceeding 0.1 g/l.

4. A beverage mix according to any of claims 1 to 3, **characterized in that** the beverage mix mixed with carbon dioxide has overpressure of up to 5 bar.

5. A beverage mix according to any of claims 1 to 4, **characterized in that** the beverage mix mixed with carbon dioxide has overpressure of 2 bar up to 5 bar, preferably from 3 bar to 4 bar.

6. A beverage mix according to claim 5, **characterized in that** the beverage mix mixed with carbon dioxide has overpressure of up to 3 bar.

7. A beverage mix according to any of claims 1 to 6, **characterized in that** the beverage mix has a sugar content not exceeding 15 g/l, preferably not exceeding 2 g/l.

8. A beverage mix according to claims 1 to 7, **characterized in that** the beverage mix is devoid of artificial sugar substitutes.

9. A beverage mix according to any of claims 1 to 8, **characterized in that** the beverage mix has an ethanol content not exceeding 0.1% by weight, preferably not exceeding 0.01% by weight.

10. A beverage mix according to any of claims 1 to 9, **characterized in that** the beverage mix is devoid of artificial flavour enhancers and/or artificial colourants and/or preservation additives.

11. A method for the production of a beverage mix according to any of claims 1 to 10, further containing drinking water, **characterized in that** table vinegar is mixed with drinking water having a mineral salt content not exceeding 500 mg/l, preferably not exceeding 300 mg/l, calculated as a solid residue, with the optional addition of at least one natural fruit juice or a natural fruit juice mixture, wherein there is finalizingly added carbon dioxide under overpressure.

## Revendications

1. Mélange de boisson additionné de dioxyde de carbone ainsi que d'une certaine quantité de vinaigre alimentaire contenant de l'acide acétique,
**caractérisé en ce que**
la concentration d'acide acétique dans le mélange de boisson représente 0,1 % en poids à 1,5 % en poids d'acide acétique et de préférence 0,4 % en poids d'acide acétique, le vinaigre alimentaire étant un vinaigre à fermentation double d'un liquide alcoolisé, en particulier un vinaigre de vin, dont la teneur en sorbitol est inférieure à 0,3 g/l, le mélange de boisson contenant en outre au moins un jus de fruit naturel ou un mélange de jus de fruit naturels, la concentration du jus de fruit dans le mélange de boisson étant comprise entre 0,1 % en poids et 5 % en poids, le mélange de boisson additionné de dioxyde de carbone présentant une surpression.

2. Mélange de boisson selon la revendication 1, **caractérisé en ce que** comme jus de fruit, il contient un jus de grenade.

3. Mélange de boisson selon les revendications 1 ou 2, **caractérisé en ce que** le vinaigre fermenté utilisé présente une teneur en sorbitol inférieure à 0,1 g/l.

4. Mélange de boisson selon l'une des revendications 1 à 3, **caractérisé en ce que** le mélange de boisson additionné de dioxyde de carbone présente une surpression pouvant atteindre 5 bars.

5. Mélange de boisson selon l'une des revendications 1 à 4, **caractérisé en ce que** le mélange de boisson additionné d'acide carbonique présente une surpression de 2 bars à 5 bars et de préférence de 3 bars à 4 bars.

6. Mélange de boisson selon la revendication 5, **caractérisé en ce que** le mélange de boisson additionné de dioxyde de carbone présente une surpression pouvant atteindre 3 bars.

7. Mélange de boisson selon l'une des revendications 1 à 6, **caractérisé en ce que** la teneur en sucre du mélange de boisson est inférieure à 15 g/l et de préférence inférieure à 2 g/l.

8. Mélange de boisson selon l'une des revendications 1 à 7, **caractérisé en ce que** le mélange de boisson est exempt d'additif sucré artificiel.

9. Mélange de boisson selon l'une des revendications 1 à 8, **caractérisé en ce que** le mélange de boisson présente une teneur en éthanol inférieure à 0,1 % en poids et de préférence inférieure à 0,01 % en poids.

10. Mélange de boisson selon l'une des revendications 1 à 9, **caractérisé en ce que** le mélange de boisson est exempt d'exhausteur de goût artificiel et/ou de colorant artificiel et/ou d'additif de conservation artificiel.

11. Procédé de fabrication d'un mélange de boisson selon l'une des revendications 1 à 10, contenant en outre de l'eau potable,
**caractérisé en ce que**
le vinaigre alimentaire est ajouté avec de l'eau potable dont la teneur en sels minéraux, calculée comme résidu solide, n'est pas supérieure à 500 mg/l et de préférence pas supérieure à 300 mg/l, avec addition sélective d'au moins un jus de fruit naturel ou un mélange de jus de fruit naturels et enfin addition de dioxyde de carbone sous pression.
